# EUROPÄISCHE PATENTSCHRIFT

(11) **EP 2 863 497 B1**
(45) Veröffentlichungstag und Bekanntmachung des Hinweises auf die Patenterteilung: **24.08.2016**
(21) Anmeldenummer: 14200703.8
(22) Anmeldetag: 19.12.2013
(51) Int. Cl.: H02B 1/20, H02B 1/32, H02B 1/42

(54) **Verteilerschrank oder -kasten der Elektroinstallation von Gebäuden**
Distribution cabinet or electrical installation boxes of buildings
Armoire ou boîte de distribution de l'installation électrique de bâtiments

(30) Priorität: 20.12.2012 DE 102012112768
(43) Veröffentlichungstag der Anmeldung: 22.04.2015
(62) Teilanmeldung aus: 13198401.5
(73) Patentinhaber: Hager Electro GmbH & Co. KG, 66440 Blieskastel (DE)
(72) Erfinder: Amendola, Ettore, 66131 Saarbrücken (DE); Vannesson, Damien, 57520 Grosbliederstroff (FR)
(74) Vertreter: Nuss, Laurent

(56) Entgegenhaltungen:
- EP-A1- 0 109 881
- EP-A1- 0 760 546
- EP-A1- 1 416 600
- EP-A1- 1 693 937
- DE-A1- 2 944 372
- DE-C1- 19 935 445
- FR-A1- 2 896 922

## Beschreibung

Die Erfindung betrifft einen Verteilerschrank oder -kasten der Elektroinstallation von Gebäuden, mit einem Trägerchassis, das parallel zur Schrank- bzw.

Kastenrückwand und parallel zueinander im Abstand angeordnete Hauptträgerschienen und wenigstens eine zu der Schrank- bzw. Kastenrückwand parallele und zu den Hauptträgerschienen senkrechte Geräteträgerschiene umfasst, wobei die Geräteträgerschiene an ihren Enden jeweils über ein Verbindungsstück mit einer der Hauptträgerschienen verbindbar ist und wobei das Verbindungsstück eine Verbindung der Geräteträgerschiene mit der Hauptträgerschiene in verschiedenen Abständen von der Schrank- bzw. Kastenrückwand erlaubt.

Derartige Verteilerschränke oder-kästen mit einem Trägerchassis zur Halterung von Schrankeinbauten sind durch Benutzung sowie aus der DE 29 44372A1, der EP 0760 546 A1, der EP 1 693 937 A1, der EP 1 416 600 A1 und aus der EP 0 109 881 A1 bekannt.

Deren horizontale, ein Hutprofil aufweisende Geräteträgerschienen dienen in erster Linie zur Aufnahme von Schaltgeräten. Vorteilhaft lassen sich Einbaugeräte im Verteilerschrank bzw. -kasten in unterschiedlichen Tiefen montieren. Bei gegebenen Abmessungen des Schrankgehäuses können damit unterschiedlich große Geräte zum Einbau kommen oder das Chassis lässt sich in Schrankgehäusen verschiedener Tiefe verwenden.

Der Erfindung liegt die Aufgabe zugrunde, einen neuen Verteilerschrank bzw. kasten der eingangs erwähnten Art zu schaffen, der eine noch variablere Positionierung von Einbauten ermöglicht.

Der diese Aufgabe lösende Verteilerschrank oder-kasten nach der Erfindung ist durch die Merkmale des Anspruchs 1 definiert.

Vorteilhaft wird das Verbindungsstück somit zusätzlich funktionell genutzt, wobei die Möglichkeit der Anordnung der Kabelkanäle in unterschiedlichen Abständen zur Kastenrückwand die Verwendung von Kabelkanälen mit unterschiedlichen Abmessungen oder die Verwendung in der Tiefe unterschiedlicher Schrankgehäuse ermöglicht. Insbesondere kann durch die Anordnung der Kabelkanäle in unterschiedlichen Abständen zur Schrankrückwand gesichert sein, dass die Oberkanten aller Kabelkanäle auf gleichem Niveau liegen.

Gemäß der Erfindung ist das Verbindungsstück mehrteilig mit einem mit der Hauptträgerschiene verbindbaren Hauptteil und einem mit der Geräteträgerschiene verbindbaren Verlängerungsstück ausgebildet. Eine Geräteträgerschiene lässt sich somit allein über das Hauptteil oder das durch das Verlängerungsstück erweiterte Hauptteil mit der Hauptträgerschiene verbinden.

Vorzugsweise ist das Verlängerungsstück formschlüssig mit dem Hauptteil verbindbar, wobei es sich insbesondere parallel zur Schrank- bzw. Kastenrückwand in eine in Richtung senkrecht zur Schrank- bzw. Kastenrückwand hinterschnittene Führung einschieben lässt. Vorzugsweise ist das Verlängerungsstück senkrecht zur Hauptträgerschiene von der der Geräteträgerschiene abgewandten Seite der Hauptträgerschiene her, d.h. der Außenseite des Trägerchassis her, in die hinterschnittene Führung einschiebbar. Entsprechend muss zwischen dem Chassis und einer zur Hauptträgerschiene parallelen Seitenwand des Schrankgehäuses ein Freiraum gebildet sein, der diese seitliche Einschiebung ermöglicht.

Zweckmäßig lässt sich das Verlängerungsstück in der hinterschnittenen Führung einrasten und dadurch befestigen.

Zusätzlich zu der Formschlussverbindung mit dem Hauptteil kann das Verlängerungsstück an dem Hauptteil durch eine Schraubverbindung fixierbar sein.

Das Verlängerungsstück des Verbindungsstücks weist Einrichtungen zur Halterung eines außerhalb des Chassis entlang der Hauptträgerschiene verlaufenden Kabelkanals auf.

Das Verlängerungsstück ist mit einer Führung versehen in der ein Kabelkanalhalterelement in verschiedenen Positionen einrastbar ist, sodass der gehaltene Kabelkanal unterschiedliche Abstände zur Schrank- bzw. Kastenrückwand aufweist.

Vorzugsweise der Hauptteil des Verbindungsstücks ist mit Einrichtungen zur Halterung eines entlang der Geräteträgerschiene verlaufenen Kabelkanals versehen.

Insbesondere kann durch zwei auf einer der Hauptträgerschienen mit ihren Enden aneinander grenzende Verbindungsstücke ein Sitz für die Aufnahme dieses sich entlang der Geräteträgerschienen erstreckenden Kabelkanals gebildet sein.

Vorzugsweise ist der sich entlang der Geräteträgerschiene erstreckende Kabelkanal zwischen einander gegenüberliegend auf den Geräteträgerschienen angeordneten Sitzen einrastbar.

In einer zweckmäßigen Ausführungsform übergreift das Verbindungsstück die Hauptträgerschiene U-förmig, wobei über die Hauptträgerschiene in Richtung zur Schrankrückwand vorstehende U-Schenkel die Hauptträgerschiene im Abstand zur Schrankrückwand halten.

Für den Verteilerschrank bzw. -kasten sind insbesondere baugleiche Verbindungsstücke vorgesehen, die sich, mit ihren Enden aneinander grenzend, jeweils über eine Rasterlänge entlang der Hauptträgerschienen erstrecken.

Die Verbindungsstücke können Ösenelemente zur Verbindung mit einem Kabelbinderstrang
aufweisen.

Zweckmäßig sind alle durch Formschluss herstellbaren Verbindungen zwischen dem Verbindungsstück und den Kabelkanälen durch Schraubverbindungen ergänz- oder ersetzbar.

Die Erfindung wird nachfolgend anhand eines Ausführungsbeispiels und der beiliegenden, sich auf dieses Ausführungsbeispiel erstreckenden Zeichnungen näher erläutert. Es zeigen:
- Fig. 1: einen erfindungsgemäßen Verteilerschrank bzw. -kasten in perspektivischer Darstellung,
- Fig. 2: ein in dem Schrank bzw. Kasten von Fig. 1 verwendetes Trägerchassis,
- Fig. 3: eine Explosivdarstellung der Einbauten des Verteilerschranks bzw.-kastens von Fig. 1,
- Fig. 4: eine Hauptträgerschiene des Chassis von Fig. 2 mit angesetzten Verbindungsstücken teilweise in Explosivdarstellung,
- Fig. 5: eine weitere Explosivdarstellung eines in dem Verteilerkasten von Fig. 1 verwendeten Verbindungsstücks, und
- Fig. 6 bis 8: weitere Detailansichten des Innenaufbaus des Verteilerschranks oder -kastens von Fig. 1.

Ein Verteilerschrank bzw. Verteilerkasten der Elektroinstallation von Gebäuden weist ein Schrankgehäuse 1 und ein in dem Schrankgehäuse 1 untergebrachtes Chassis 2 für die Halterung von Schrankeinbauten auf.

Das Chassis 2 umfasst zwei parallel zueinander im Abstand angeordnete Hauptträgerschienen 3, die längsseitig mit einer Rückwand 4 des Schrankgehäuses 1 verbindbar sind.

Die Hauptträgerschienen 3 stehen ihrerseits miteinander durch Geräteträgerschienen 5 in Verbindung, die zu den Hauptträgerschienen 3 senkrecht verlaufen und ein Hutprofil aufweisen.

Die Verbindung zwischen den Hauptträgerschienen 3 und den Enden der drei Geräteträgerschienen 5 ist jeweils durch ein Verbindungsstück 6 aus einem Thermooder Duroplast hergestellt. Die baugleichen Verbindungsstücke 6 erstrecken sich jeweils entlang der betreffenden Trägerschiene 3 über eine Rasterlänge und grenzen mit ihren Enden aneinander an.

Die horizontale Breite des Chassis 2 ist geringer als die horizontale Breite des Schrankgehäuses 1 . Zwischen den vertikalen Seitenwänden des Gehäuses 1 und dem Chassis 2 bestehender Freiraum kann daher für die Unterbringung eines Kabelkanals 7 genutzt werden. Ein weiterer Kabelkanal 8 befindet sich zwischen zwei der Geräteträgerschienen 5 und verläuft zu diesen parallel.

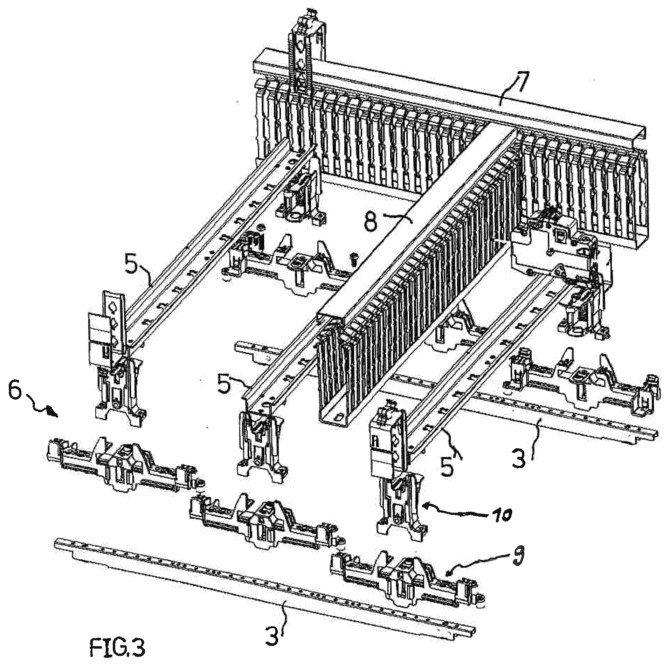

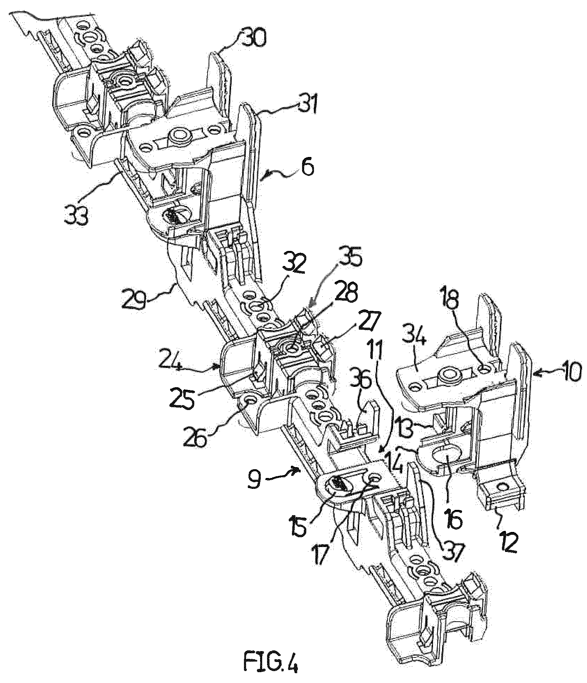

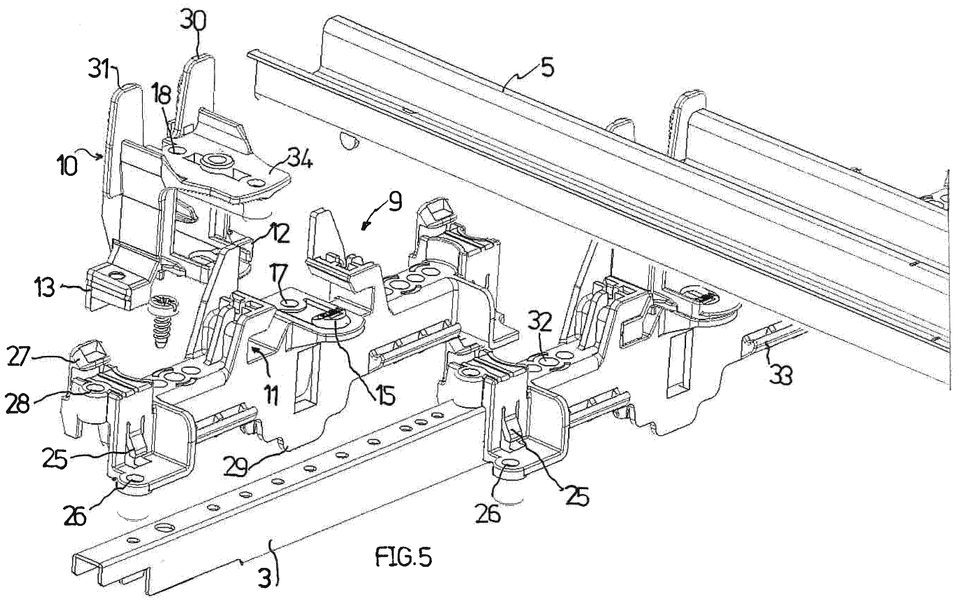

Wie insbesondere die Figuren 3 bis 5 erkennen lassen, bestehen die Verbindungsstücke 6 jeweils aus einem Hauptteil 9 und einem Verlängerungsstück 10. Das Verlängerungsstück 10, das eine Befestigungsplatte 34 für die Geräteträgerschiene 5 aufweist, lässt sich formschlüssig mit dem Hauptteil 9 verbinden, wozu es parallel zur Geräteträgerschiene 5 und parallel zur Rückwand 4 des Schrankgehäuses 1 in eine hinterschnittene Führung 11 in dem Hauptteil 9 einschiebbar und in der hinterschnittenen Führung 11 einrastbar ist. Dabei greift das Verlängerungsstück 10 mit Auslegern 12 und 13 sowie einem Mittelstück 14 in die hinterschnittene Führung 11 ein, wobei eine elastisch abbiegbare Rastnase 15 an dem Hauptteil 9 in einer Öffnung 16 in dem Mittelstück 14 einrastet.

Eine Verbindung zwischen einer der Hauptträgerschienen 3 und einer der Geräteträgerschienen 5 kann sowohl allein über das Hauptteil 9 des Verbindungsstücks 6 als auch das mit dem Hauptteil 9 verbundene Verlängerungsstück 10 hergestellt werden. Im ersteren Fall dient ein Loch 17 und im zweiten Fall ein Loch 18 zur Verschraubung der Geräteträgerschiene 5 mit dem Verbindungsstück 6. Auch zwischen dem Hauptteil 9 und dem Verlängerungsstück 10 sind zusätzlich zu der beschriebenen Rastverbindung Schraubenverbindungen möglich.

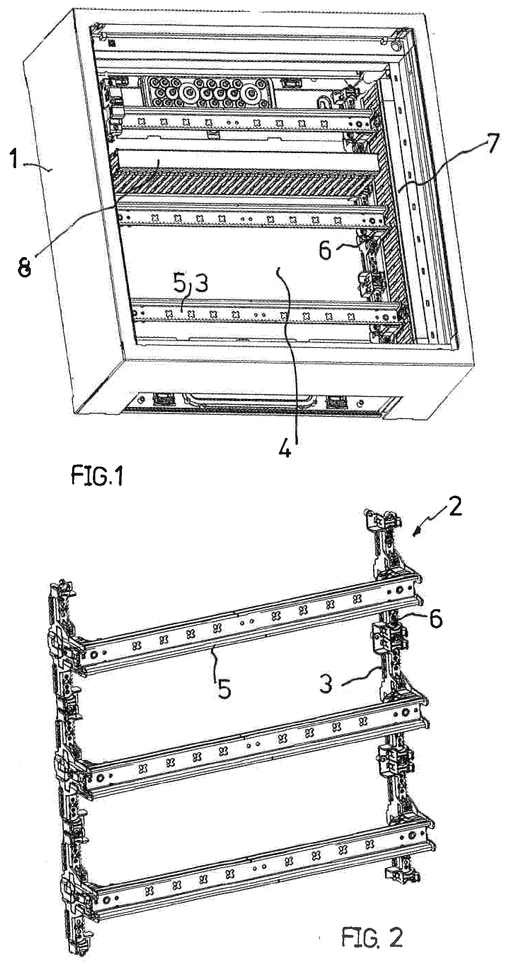

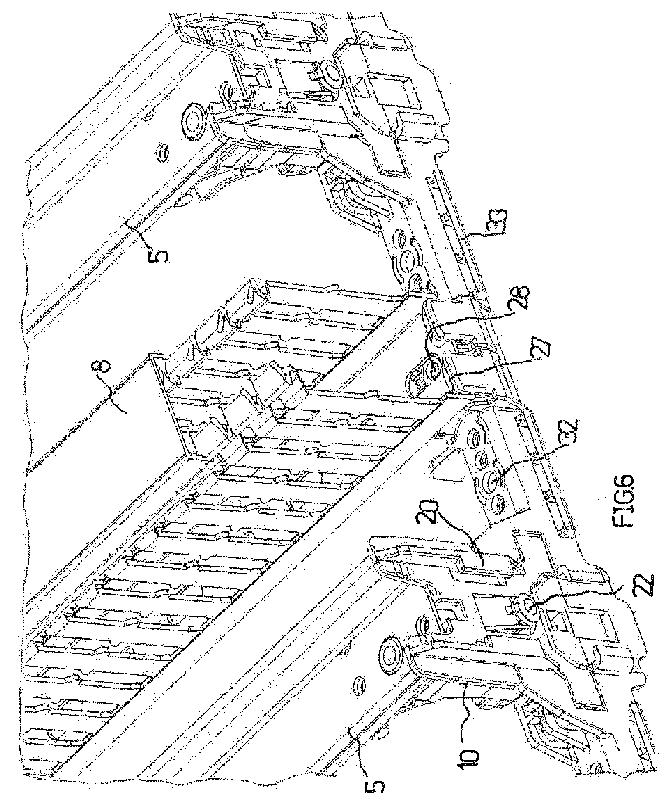

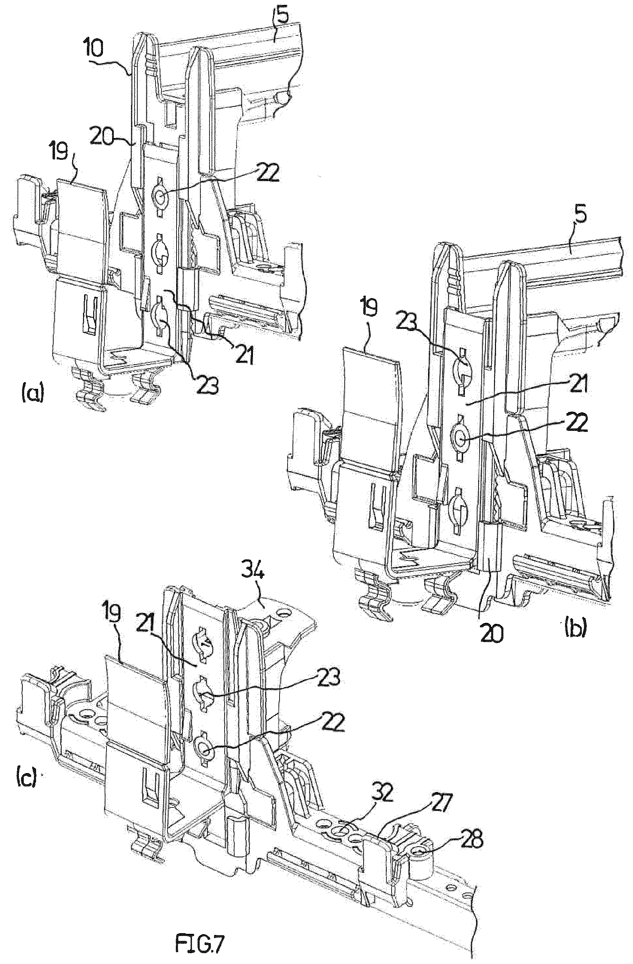

Wie aus Fig. 6 und 7 hervorgeht, weist das Verlängerungsstück 10 auf seiner dem Ende der Geräteträgerschiene 5 abgewandten Seite Einrichtungen zur Befestigung eines Kabelkanalhalters 19 auf. Diese Einrichtungen umfassen eine Führung 20 für einen Schenkel 21 des Kabelkanalhalters 19 sowie eine abbiegbare Rastnase 22. Die Rastnase 22 lässt sich mit Hilfe eines Hebels am Verlängerungsstück 10 entriegeln. Gemäß Fig. 7 kann der Kabelkanalhalter 19 in drei verschiedenen Stellungen an dem Verlängerungsstück 10 befestigt werden, wobei die Rastnase 22 in einer von drei Öffnungen 23 in dem Schenkel 21 des Kabelkanalhalters 19 einrastet. In den Kabelkanalhalter lässt sich der in Fig. 1 und 3 gezeigte Kabelkanal 7 einschieben und verrasten.

Verbindungsmöglichkeiten zu dem Kabelkanal 8 bestehen an der Stoßstelle zwischen zwei Verbindungsstücken 6, wodurch die beiden aneinander stoßenden Enden der Verbindungsstücke 6 einen Aufnahmesitz 24 für das Ende des Kabelkanals 8 bilden. Rastnasen 25 dienen zur Verrastung des Kabelkanals, ein Loch 26 zur zusätzlichen Herstellung einer Schraubverbindung.

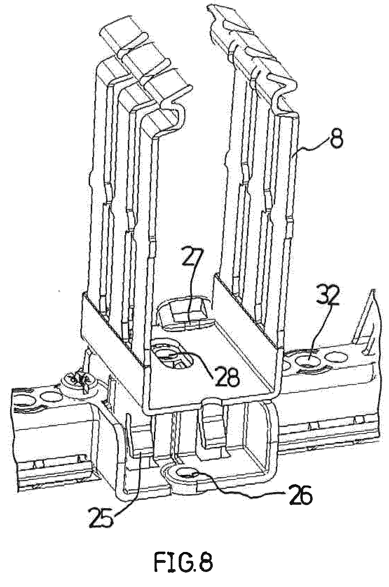

Wie der Kabelkanal 7 lässt sich auch der Kabelkanal 8 in verschiedenen Höhen über der Rückwand 4 des Schrankgehäuses 1 montieren, wozu oberhalb des Sitzes 24 ein weiterer Aufnahmesitz 35 mit Rastnasen 27 und einem Befestigungsloch 28 vorgesehen ist. Fig. 8 zeigt eine solche Befestigung eines Kabelkanals an dem oberen Sitz 35.

Der Hauptteil 9 des Verbindungsstücks 6 umgreift die Hauptträgerschiene 3 U-förmig, wobei die U-Schenkel bei 29 über die Hauptträgerschiene 3 hinaus in Richtung zur Rückwand 4 des Schrankgehäuses 1 überstehen. Die Hauptträgerschiene 3 ist durch das Verbindungsstück dadurch im Abstand von der Rückwand 4 gehalten. Vorteilhaft
ist somit die Verlegung von Kabeln unter der Hauptträgerschiene 3 möglich. Auch zwischen dem Kabelkanal 8 und der Rückwand 4 ist bei Befestigung auf dem Sitz 24 eine Verlegung von Kabeln unter der Kabelführung hindurch möglich.

An dem Verlängerungsstück 10 gebildete Vorsprünge 30 und 31 dienen als Anschläge für auf der Geräteträgerschiene 5 montierte Geräte. Am Hauptteil 9 des Verbindungsstücks 6 sind entsprechende Vorsprünge 36 und 37 vorgesehen, die bei Montage der Geräteträgerschiene nur auf dem Hauptteil 9 wirksam werden.

Bei 32 gebildete Befestigungslöcher bieten weitere Möglichkeiten für die Montage einer Geräteträgerschiene.

An Ösenleisten 33, die von dem Verbindungsstück 6 abstehen, lassen sich Kabelbinder befestigen.

## Patentansprüche

1. Verteilerschrank oder-kasten der Elektroinstallation von Gebäuden, mit einem Trägerchassis (2), das parallel zur Schrank- bzw. Kastenrückwand (4) und parallel zueinander im Abstand angeordnete Hauptträgerschienen (3) und wenigstens eine zu der Schrank- bzw. Kastenrückwand (4) parallele und zu den Hauptträgerschienen (3) senkrechte Geräteträgerschiene (5) umfasst, wobei die Geräteträgerschiene (5) an ihren Enden jeweils über ein Verbindungsstück (6) mit einer der Hauptträgerschienen (3) verbindbar ist und wobei das Verbindungsstück (6) eine Verbindung der Geräteträgerschiene (5) mit der Hauptträgerschiene (3) in verschiedenen Abständen von der Schrank- bzw. Kastenrückwand (4) erlaubt, wobei das Verbindungsstück (6) mehrteilig mit einem mit der Hauptträgerschiene (3) verbindbaren Hauptteil (9) und einem mit der Geräteträgerschiene (5) verbindbaren Verlängerungsstück (10) ausgebildet ist, **dadurch gekennzeichnet, dass** das Verbindungsstück (6) ferner Einrichtungen zur Halterung eines Kabelkanals (7,8) in verschiedenen Abständen zu der Schrank- bzw. Kastenrückwand (4), aufweist, und dass das Verlängerungsstück (10) des Verbindungsstücks (6) Einrichtungen zur Halterung eines außerhalb des Chassis (2) entlang der Hauptträgerschiene (3) verlaufenden Kabelkanals (7) aufweist, wobei das Verlängerungsstück (10) eine Führung (20) aufweist, in der ein Kabelhalterelement (19) zur Halterung des sich entlang der Hauptträgerschiene (3) erstreckenden Kabelkanals (7) in verschiedenen Positionen einrastbar ist.

2. Verteilerschrank oder -kasten nach Anspruch 1, **dadurch gekennzeichnet, dass** das Verlängerungsstück (10) des Verbindungsstücks (6) formschlüssig mit dem Hauptteil (9) verbindbar ist, vorzugsweise durch Einschieben in eine hinterschnittene Führung (11) parallel zur Schrank- bzw. Kastenrückwand (4).

3. Verteilerschrank oder -kasten nach Anspruch 2, **dadurch gekennzeichnet, dass** das Verlängerungsstück (10) in die hinterschnittene Führung (11) senkrecht zur Hauptträgerschiene (3) von der der Geräteträgerschiene (3) abgewandten Außenseite des Chassis (2) her, einschiebbar ist.

4. Verteilerschrank oder -kasten nach Anspruch 2 oder 3,
**dadurch gekennzeichnet,**
**dass** das Verlängerungsstück (10) des Verbindungsstücks (6) in der hinterschnittenen Führung (11) einrastbar ist.

5. Verteilerschrank oder -kasten nach einem der Ansprüche 1 bis 4,
**dadurch gekennzeichnet,**
**dass** das Verlängerungsstück (10) des Verbindungsstücks (6) zusätzlich zu der Formschlussverbindung an dem Hauptteil (9) des Verbindungsstücks (6) durch eine Schraubverbindung fixierbar ist.

6. Verteilerschrank oder -kasten nach einem der Ansprüche 1 bis 5,
**dadurch gekennzeichnet,**
**dass** die Einrichtungen zur Halterung des außerhalb des Chassis (2) entlang der Hauptträgerschiene (3) verlaufenden Kabelkanals (7) eine Halterung in verschiedenen Abständen von der Schrank- bzw. Kastenrückwand (4) ermöglichen.

7. Verteilerschrank oder -kasten nach einem der Ansprüche 1 bis 6,
**dadurch gekennzeichnet,**
**dass** der Hauptteil (9) des Verbindungsstücks (6) Einrichtungen zur Halterung eines entlang der Geräteträgerschiene (5) verlaufenden Kabelkanals (8), vorzugsweise in verschiedenen Abständen zur Schrank- bzw. Kastenrückwand (4), aufweist.

8. Verteilerschrank oder -kasten nach Anspruch 7,
**dadurch gekennzeichnet,**
**dass** auf den Hauptträgerschienen (3) mit ihren Enden aneinander grenzende Verbindungsstücke (6) je einen Sitz (24) für die Aufnahme des sich entlang der Geräteträgerschiene (5) erstreckenden Kabelkanals (8) bilden.

9. Verteilerschrank oder-kasten nach Anspruch 8,
**dadurch gekennzeichnet,**
**dass** der sich entlang der Geräteträgerschiene (5) erstreckende Kabelkanal (8) mit seinen Enden in Sitzen (24,35) einrastbar ist, die auf den Trägerschienen (3) einander gegenüberliegend angeordnet sind.

10. Verteilerschrank oder -kasten nach einem der Ansprüche 1 bis 9,
**dadurch gekennzeichnet,**
**dass** das Verbindungsstück (6) die Hauptträgerschiene (3) U-förmig übergreift und über die Hauptträgerschiene (3) in Richtung zur Schrank- bzw. Kastenrückwand (4) vorstehende U-Schenkel (29) aufweist, welche die Hauptträgerschiene (3) im Abstand zu der Schrank- bzw. Kastenrückwand (4) halten.

11. Verteilerschrank oder-kasten nach einem der Ansprüche 1 bis 10,
**dadurch gekennzeichnet,**
**dass** baugleiche Verbindungsstücke (6) vorgesehen sind, die sich mit ihren Enden aneinander angrenzend jeweils über eine Rasterlänge entlang der Hauptträgerschienen (3) erstrecken.

12. Verteilerschrank oder-kasten nach einem der Ansprüche 1 bis 11,
**dadurch gekennzeichnet,**
**dass** die Verbindungsstücke (6) Ösenelemente (33) zur Verbindung mit einem Kabelbinder aufweisen.

## Claims

1. Distribution cabinet or electrical installation box of buildings, comprising a support body (2), which comprises main support rails (3) arranged parallel to the rear cabinet or box wall (4), in parallel to each other and at a distance apart from one another and at least one equipment carrier rail (5) parallel to the rear cabinet and box wall (4) and perpendicular to the main support rails (3), wherein the equipment carrier rail (5) can be connected at its ends respectively via a connector (6) to one of the main support rails (3) and wherein the connector (6) allows the connection of the equipment carrier rail (5) to the main support rail (3) at variable distances from the rear cabinet or box wall (4),
wherein the connector (6) is designed to have multiple parts with a main part (9) connectable to the main support rail (3) and an extension piece (10) connectable to the equipment carrier rail (5), **characterised in that** the connector (6) also comprises means for supporting a cable channel (7, 8) at various distances from the rear cabinet or box wall (4) and **in that** the extension piece (10) of the connector (6) comprises means for supporting a cable channel (7) running outside the body (2) along the main support rail (3), wherein the extension piece (10) comprises a guide (20) in which a cable holding element (19) can be engaged in different positions for holding the cable channel (7) extending along the main support rail (3).

2. Distribution cabinet or box according to claim 1,
**characterised in that**
the extension piece (10) of the connector (6) can be connected in a form-fitting manner to the main part (9), preferably by pushing into an undercut guide (11) parallel to the rear cabinet and box wall (4).

3. Distribution cabinet or box according to claim 2,
**characterised in that**
the extension piece (10) can be pushed into the undercut guide (11) perpendicular to the main support rail (3) from the outside of the body (2) facing away from the equipment carrier rail (3).

4. Distribution cabinet or box according to claim 2 or 3,
**characterised in that**
the extension piece (10) of the connector (6) can be locked into the undercut guide (11).

5. Distribution cabinet or box according to any one of claims 1 to 4,
**characterised in that**
the extension piece (10) of the connector (6) can be fixed in addition to the form-fitting connection on the main part (9) of the connector (6) by a screw connection.

6. Distribution cabinet or box according to any one of the preceding claims 1 to 5,
**characterised in that** the means for supporting the cable channel (7) running outside the body (2) along the main support rail (3) allow support at various distances from the rear cabinet or box wall (4).

7. Distribution cabinet or box according to any one of claims 1 to 6,
**characterised in that**
the main part (9) of the connector (6) comprises means for supporting a cable channel (8) running along the equipment carrier rail (5), preferably at various distances from the rear cabinet or box wall (4).

8. Distribution cabinet or box according to claim 7,
**characterised in that**
on the main support rails (3) connectors (6) with their adjoining ends each form a seat (24) for mounting the cable channel (8) extending along the equipment carrier rail (5).

9. Distribution cabinet or box according to claim 8,
**characterised in that**
the cable channel (8) extending along the equipment carrier rail (5) can be locked at its ends in seats (24, 35) which are arranged opposite one another on the support rails (3).

10. Distribution cabinet or box according to any one of claims 1 to 9, **characterised in that**
the connector (6) grips over the main support rail (3) in a U-shape and has U-legs (29) projecting over the main support rail (3) in the direction of the rear cabinet or box wall (4), which U-legs hold the main support rail (3) at a distance from the rear cabinet or box wall (4).

11. Distribution cabinet or box according to any one of claims 1 to 10,
**characterised in that**
structurally identical connectors (6) are provided which extend with their ends adjoining one another over a grid length along the main support rails (3) respectively.

12. Distribution cabinet or box according to any one of claims 1 to 11,
**characterised in that**
the connectors (6) comprise eyelets (33) for connecting to a cable tie.

## Revendications

1. Armoire ou boîte de distribution de l'installation électrique de bâtiments, avec un châssis porteur (2), qui comprend des rails porteurs principaux (3) disposés à distance parallèlement à la paroi arrière (4) de l'armoire ou de la boîte et parallèlement entre eux, et au moins un rail (5) porteur d'appareil parallèle à la paroi arrière (4) de l'armoire ou de la boîte et perpendiculaire aux rails porteurs principaux (3),
sachant que le rail (5) porteur d'appareil peut être relié à chacune de ses extrémités à un des rails porteurs principaux (3) par l'intermédiaire d'un connecteur respectif (6),
et sachant que le connecteur (6) permet de relier le rail (5) porteur d'appareil au rail porteur principal (3) à différentes distances de la paroi arrière (4) de l'armoire ou de la boîte, sachant que le connecteur (6) est réalisé en plusieurs parties avec une partie principale (9) pouvant être reliée au rail porteur principal (3) et une rallonge (10) pouvant être reliée au rail (5) porteur d'appareil,
**caractérisée en ce que** le connecteur (6) présente en outre des dispositifs pour le maintien d'un caniveau de câbles (7, 8) à différentes distances de la paroi arrière (4) de l'armoire ou de la boîte,
et **en ce que** la rallonge (10) du connecteur (6) présente des dispositifs pour le maintien d'un caniveau de câbles (7) s'étendant le long du rail porteur principal (3) à l'extérieur du châssis (2), sachant que la rallonge (10) présente un guide (20) dans lequel un élément (19) de maintien de câble, destiné à maintenir le caniveau de câbles (7) s'étendant le long du rail porteur principal (3), peut être enclenché dans différentes positions.

2. Armoire ou boîte de distribution selon la revendication 1, **caractérisée en ce que** la rallonge (10) du connecteur (6) peut être reliée en engagement positif à la partie principale (9), de préférence par insertion dans un guide contre-dépouillé (11) parallèlement à la paroi arrière (4) de l'armoire ou de la boîte.

3. Armoire ou boîte de distribution selon la revendication 2, **caractérisée en ce que** la rallonge (10) peut être insérée dans le guide contre-dépouillé (11) perpendiculairement au rail porteur principal (3) depuis le côté extérieur du châssis (2) qui est opposé au rail porteur principal (3).

4. Armoire ou boîte de distribution selon la revendication 2 ou 3, **caractérisée en ce que** la rallonge (10) du connecteur (6) peut être enclenchée dans le guide contre-dépouillé (11).

5. Armoire ou boîte de distribution selon l'une des revendications 1 à 4, **caractérisée en ce que** la rallonge (10) du connecteur (6) peut, en plus de la liaison par engagement positif, être fixée sur la partie principale (9) du connecteur (6) par une liaison vissée.

6. Armoire ou boîte de distribution selon l'une des revendications 1 à 5, **caractérisée en ce que** les dispositifs pour le maintien du caniveau de câbles (7) s'étendant le long du rail porteur principal (3) à l'extérieur du châssis (2) permettent un maintien à différentes distances de la paroi arrière (4) de l'armoire ou de la boîte.

7. Armoire ou boîte de distribution selon l'une des revendications 1 à 6, **caractérisée en ce que** la partie principale (9) du connecteur (6) présente des dispositifs pour le maintien d'un caniveau de câbles (8) s'étendant le long du rail (5) porteur d'appareil, de préférence à différentes distances de la paroi arrière (4) de l'armoire ou de la boîte.

8. Armoire ou boîte de distribution selon la revendication 7, **caractérisée en ce que** des connecteurs (6) adjacents par leurs extrémités sur les rails porteurs principaux (3) forment un siège respectif (24) pour la réception du caniveau de câbles (8) s'étendant le long du rail (5) porteur d'appareil.

9. Armoire ou boîte de distribution selon la revendication 8, **caractérisée en ce que** le caniveau de câbles (8) s'étendant le long du rail (5) porteur d'appareil peut être enclenché par ses extrémités dans des sièges (24, 35) qui sont disposés en vis-à-vis sur les rails porteurs (3).

10. Armoire ou boîte de distribution selon l'une des revendications 1 à 9, **caractérisée en ce que** le connecteur (6) recouvre en forme de U le rail porteur principal (3) et présente des branches de U (29) dépassant du rail porteur principal (3) en direction de la paroi arrière (4) de l'armoire ou de la boîte, branches qui maintiennent le rail porteur principal (3) à distance de la paroi arrière (4) de l'armoire ou de la boîte.

11. Armoire ou boîte de distribution selon l'une des revendications 1 à 10, **caractérisée en ce qu'**il est prévu des connecteurs (6) de construction identiques, qui s'étendent respectivement, en étant adjacents par leurs extrémités, sur une longueur de trame le long des rails porteurs principaux (3).

12. Armoire ou boîte de distribution selon l'une des revendications 1 à 11, **caractérisée en ce que** les connecteurs (6) présentent des éléments formant oeillets (33) pour les relier à un serre-câble.
